# FASCICULE DE BREVET EUROPEEN

(11) **EP 3 259 312 B1**
(45) Date de publication et mention de la délivrance du brevet: **04.09.2019**
(21) Numéro de dépôt: 16705086.3
(22) Date de dépôt: 11.02.2016
(51) Int. Cl.: C08K 5/13, B60C 1/00, C08K 3/04, C08K 3/36, C08L 7/00, C08L 9/06

(54) **PNEUMATIQUE DONT LA BANDE DE ROULEMENT COMPORTE UN COMPOSE PHENOLIQUE**
REIFEN MIT LAUFFLÄCHE MIT EINER PHENOLVERBINDUNG
TYRE, THE TREAD OF WHICH INCLUDES A PHENOLIC COMPOUND

(30) Priorité: 17.02.2015 FR 1551293
(43) Date de publication de la demande: 27.12.2017
(73) Titulaire: Compagnie Générale des Etablissements Michelin, 63000 Clermont-Ferrand (FR)
(72) Inventeur: VASSEUR, Didier, 63040 Clermont-Ferrand Cedex 9 (FR)
(74) Mandataire: Sidhu, Alban
(86) Numéro de dépôt international: PCT/EP2016/052916
(87) Numéro de publication internationale: WO 2016/131704

(56) Documents cités:
- EP-A1- 0 697 432
- WO-A1-99/02590
- WO-A1-2012/069567
- US-A1- 2010 286 004

## Description

La présente invention est relative aux bandes de roulement de pneumatiques et aux compositions de caoutchouc à base d'élastomère diénique, utilisables pour la fabrication de telles bandes de roulement de pneumatiques.

Une bande de roulement de pneumatique doit obéir de manière connue à un grand nombre d'exigences techniques, souvent antinomiques, parmi lesquelles une résistance élevée à l'usure, une faible résistance au roulement, ainsi qu'une adhérence élevée sur route sèche comme mouillée. Elle doit également offrir un bon comportement routier au pneumatique.

Ces compromis de propriétés, en particulier du point de vue de la résistance au roulement et de résistance à l'usure, ont pu être améliorés ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (Highly Dispersible Silica), capables de rivaliser, du point de vue du pouvoir renforçant, avec les noirs de carbone conventionnels de grade pneumatique.

L'amélioration de la résistance au roulement est une préoccupation constante des concepteurs de pneumatiques.

Au cours de leurs recherches, les Demanderesses ont découvert une composition de caoutchouc associée à un plastifiant spécifique qui, utilisée comme bande de roulement de pneumatique, permet d'améliorer la résistance au roulement, tout en améliorant la résistance à l'usure sévère.

Ainsi, l'invention concerne un pneumatique dont la bande de roulement comprend une composition de caoutchouc à base d'au moins :
- un élastomère diénique ;
- 50 à 150 pce d'une charge renforçante ;
- un système de réticulation ;
- un système plastifiant comprenant au moins de plus de 15 à 80 pce d'un composé phénolique non polymérique dont la température de fusion est inférieure à 170°C.

Les pneumatiques de l'invention sont particulièrement destinés à équiper des véhicules à moteur de type tourisme, incluant les véhicules 4x4 (à quatre roues motrices) et les véhicules SUV (*"Sport Utility Vehicles"*), des véhicules deux roues (notamment motos) comme des véhicules industriels choisis en particulier parmi camionnettes et "Poids-lourd" tels que bus, engins de transport routier tels que camions.

L'invention ainsi que ses avantages seront aisément compris à la lumière de la description et des exemples de réalisation qui suivent.

### I - MESURES ET TESTS UTILISES

Les compositions de caoutchouc utilisées dans les pneumatiques selon l'invention sont caractérisées après cuisson, comme indiqué ci-après.

### I-1. Dureté Shore A

La dureté Shore A des compositions après cuisson est appréciée conformément à la norme ASTM D 2240-86.

### 1-2. Essais de traction

Ces essais permettent de déterminer les contraintes d'élasticité et les propriétés à la rupture. Sauf indication différente, ils sont effectués conformément à la norme française NF T 46-002 de septembre 1988. On mesure en seconde élongation (i.e. après un cycle d'accommodation au taux d'extension prévu pour la mesure elle-même).

Ces essais permettent de déterminer les propriétés à la rupture. On mesure les allongements à la rupture (AR en %) et les contraintes à la rupture (CR en MPa), et on calcule l'énergie rupture (en MJ), comme étant par le produit de la valeur de l'allongement rupture par la valeur de la contrainte rupture. Toutes ces mesures de traction sont effectuées dans les conditions normales de température (23 ± 2°C) et d'hygrométrie (50 ± 5% d'humidité relative), selon la norme française NF T 40-101 (décembre 1979).

### 1-3. Propriétés dynamiques

Les propriétés dynamiques sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz.

On effectue un balayage en amplitude de déformation de 0,1 à 50% (cycle aller), puis de 50% à 1% (cycle retour). Le résultat exploité est le facteur de perte tan(δ). Pour le cycle retour, on indique la valeur maximale de tan(δ) observée, noté tan(δ)ₘₐₓ à 40°C.

On rappelle que, de manière bien connue de l'homme du métier, la valeur de tan(δ)ₘₐₓ à 40°C est représentative de l'hystérèse du matériau donc de la résistance au roulement : plus tan(δ)ₘₐₓ à 40°C est faible, plus la résistance au roulement est basse.

### 1-4. Essais de résistance à l'usure sur pneumatiques

On soumet les pneumatiques à un roulage réel sur une distance de 400km par jour, sur des routes ouvertes et comportant des virages, hors autoroute et piste, sur un véhicule automobile déterminé, jusqu'à atteindre une distance de 10000 km. On mesure la perte de hauteur en plusieurs points du pneumatique et on calcule une hauteur moyenne d'usure du pneumatique. Une valeur supérieure à celle du témoin, arbitrairement fixée à 100, indique un résultat amélioré c'est-à-dire une usure diminuée.

### II - DESCRIPTION DETAILLEE DE L'INVENTION

Dans la présente description, sauf indication expresse différente, tous les pourcentages (%) indiqués sont des pourcentages en masse.

L'abréviation "pce" (usuellement *"phr"* en anglais) signifie parties en poids pour cent parties d'élastomère ou caoutchouc (du total des élastomères si plusieurs élastomères sont présents). D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Toutes les valeurs de température de transition vitreuse « Tg » sont mesurées de manière connue par DSC (Differential Scanning Calorimetry) selon la norme ASTM D3418 (1999).

Le pneumatique de l'invention a donc pour caractéristique essentielle que sa bande de roulement comporte une composition de caoutchouc comprenant au moins un élastomère diénique, une charge renforçante, et un système plastifiant comprenant au moins un composé phénolique (ou plastifiant phénolique), composants qui vont être décrits en détail ci-après.

### II.1 - Elastomère diénique

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

L'élastomère diénique est choisi préférentiellement dans le groupe constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à la charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752*).*

Conviennent les polybutadiènes et en particulier ceux ayant une teneur (% molaire) en unités - 1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre -5°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -5°C et -70°C.

Selon un autre mode particulier de réalisation, l'élastomère diénique est choisi dans le groupe constitué par les polybutadiènes, les copolymères de butadiène et les mélanges de ces élastomères. Plus préférentiellement, il s'agit d'un copolymère styrène-butadiène (SBR).

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques.

### II.2 - Charge renforçante

La composition de la bande de roulement du pneumatique selon l'invention comporte une charge renforçante inorganique (telle que de la silice) dans une proportion de 50 à 150 pce, préférentiellement de 70 à 150 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface. Comme charges inorganiques renforçantes conviennent notamment des charges minérales du type siliceux, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387. A titre de charge inorganique renforçante, on citera également les charges minérales du type alumineuse, en particulier de l'alumine (Al2O3) ou des (oxyde)hydroxydes d'aluminium, ou encore des oxydes de titane renforçants.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Selon un mode de réalisation avantageux, la composition de la bande de roulement peut comporter majoritairement en poids de silice (c'est-à-dire à un taux supérieur en pce aux autres charges) et minoritairement de noir de carbone. Dans ce cas le noir de carbone, est utilisé de préférence à un taux inférieur à 20 pce, plus préférentiellement inférieur à 10 pce (par exemple entre 0,5 et 20 pce, notamment entre 2 et 10 pce). La silice quant à elle, est préférentiellement présente à un taux compris dans un domaine allant de 50 à 150 pce, de préférence de 70 à 140 pce.

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:
(I) Z - A - Sₓ - A - Z , dans laquelle:
   - x est un entier de 2 à 8 (de préférence de 2 à 5) ;
   - les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
   - les symboles Z, identiques ou différents, répondent à l'une des trois formules ci-après: 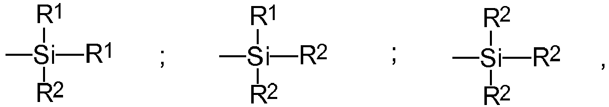 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685. Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### II.3 - Plastifiant phénolique

La composition de la bande de roulement du pneumatique selon l'invention a pour autre caractéristique essentielle de comporter un système plastifiant comprenant au moins de plus de 15 à 80 pce d'un composé phénolique (ou plastifiant phénolique) non polymérique dont la température de fusion est inférieure à 170°C.

Ainsi, le système plastifiant, qui de manière connue de l'homme du métier peut comprendre les huiles et les résines plastifiantes connues de l'homme de l'art (voir plastifiant supplémentaire optionnel ci-après), comprend aussi selon la présente invention un composé particulier, non connu à ce jour, pour ses propriétés plastifiantes ; un composé phénolique. Par composé phénolique on entend une molécule organique comprenant un ou plusieurs cycles aromatiques de type phénol, éventuellement substitués par des groupements hydrocarbonés tels que alkyles, aryles, aralkyles ou alkylaryles, ces groupements hydrocarbonés pouvant comprendre un ou plusieurs hétéroatomes choisis parmi l'azote et l'oxygène. Il est important pour les besoins de l'invention que la température de fusion de ces composés phénoliques soit inférieure à 170°C, pour que l'effet recherché puisse être obtenu. Ces composés ne sont pas des polymères, il s'agit de composés organiques comprenant au maximum 4 motifs phénoliques. Ainsi, ces composés comprennent de préférence 1, 2, 3 ou 4 motifs phénoliques, plus préférentiellement ces composés comprennent 1, 2 ou 4 motifs phénoliques.

Préférentiellement, ces composés ont une masse moléculaire inférieure à 1200 g/mol, plus préférentiellement inférieur à 700 g/mol et de manière très préférentielle inférieure à 500 g/mol.

Préférentiellement le taux de plastifiant phénolique est compris dans un domaine de 16 à 50 pce, plus préférentiellement de 17 à 40 pce.

Préférentiellement, les plastifiants phénoliques suivants sont plus particulièrement utilisés ;
- le tétra-kis(methylène-3-(3,5-di-tert-butyl-4-hydroxyphényl)propionate)méthane, par exemple commercialisé par la société SONGWON sous la marque « SONGNOX 1010 », dont la température de fusion est comprise entre 110 et 125°C ;
- Le 2,2'-méthylène-bis(4-méthyl-6-tert-butylphénol), dénommé BPH, par exemple commercialisé par la société Lanxess, sous la référence commerciale « VULKANOX BKF », dont la température de fusion est comprise entre 125 et 132 °C ;
- Le 2-tert-butyl-4-méthylphénol, par exemple commercialisé par la société Lanxess, sous la dénomination commerciale « MBP-K », dont la température de fusion est comprise entre 99 et 101°C.

Plus préférentiellement, le composé phénolique plus particulièrement utilisé est le 2-tert-butyl-4-méthylphénol.

### II.4 - Système de réticulation

La composition de la bande de roulement du pneumatique selon l'invention comporte un système de réticulation.

Le système de réticulation peut être un système de vulcanisation, il est préférentiellement à base de soufre ou de donneurs de soufre et/ou de peroxyde et/ou de bismaléimides, d'accélérateur primaire de vulcanisation (préférentiellement 0,5 à 10,0 pce d'accélérateur primaire), et des activateurs de vulcanisation. A ce système de vulcanisation viennent optionnellement s'ajouter, divers accélérateurs secondaires ou activateurs de vulcanisation connus tels qu'oxyde de zinc (préférentiellement pour 0,5 à 10,0 pce), acide stéarique, dérivés guanidiques (en particulier diphénylguanidine), ou autres (préférentiellement pour 0,5 à 5,0 pce chacun). Le soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à une bande de roulement de pneumatique.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### II.5 - Plastifiant supplémentaire optionnel

De manière optionnelle, la composition de caoutchouc selon l'invention comporte en outre un plastifiant supplémentaire, qui peut être un plastifiant liquide, une résine ou un mélange des deux.

Préférentiellement, ce plastifiant supplémentaire est présent à un taux compris entre 0 et 90 pce, de préférence dans un domaine allant de 10 à 70 pce.

Le plastifiant liquide est préférentiellement liquide à 20 °C, il est dit à « basse Tg », c'est-à-dire qu'il présente par définition une Tg inférieure à -20 °C, de préférence inférieure à -40 °C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (Distillate Aromatic Extracts), les huiles MES (Medium Extracted Solvates), les huiles TDAE (Treated Distillate Aromatic Extracts), les huiles RAE (Residual Aromatic Extracts), les huiles TRAE (Treated Residual Aromatic Extracts), les huiles SRAE (Safety Residual Aromatic Extracts), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Le plastifiant supplémentaire peut également être une résine hydrocarbonée présente une Tg supérieure à 20°C.

La dénomination "résine" est réservée dans la présente demande, par définition, à un composé qui est solide à température ambiante (20°C), par opposition notamment à un agent plastifiant liquide tel qu'une huile.

Les résines hydrocarbonées sont préférentiellement des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 30°C, notamment comprise entre 30°C et 95°C.

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "softening point"). La température de ramollissement d'une résine hydrocarbonée est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 20°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

### II.6 - Additifs divers optionnels

Les compositions de caoutchouc des bandes de roulement des pneumatiques conformes à l'invention peuvent comporter également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M).

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### II.7 - Préparation des compositions de caoutchouc

Les compositions utilisées dans les bandes de roulement des pneumatiques de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) le ou les élastomères diéniques avec la charge renforçante, le plastifiant phénolique, et les autres constituants optionnels (à l'exception du système de réticulation), jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques, le plastifiant, la charge renforçante), puis dans un deuxième temps, par exemple après une à deux minutes de malaxage, les autres additifs optionnels, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les pneumatiques précédemment décrits tant à l'état cru (c'est à dire, avant cuisson) qu'à l'état cuit (c'est à dire, après réticulation ou vulcanisation).

La composition finale ainsi obtenue est ensuite calandrée, par exemple sous la forme d'une feuille ou d'une plaque, notamment pour une caractérisation au laboratoire, ou encore extrudée, pour former par exemple un profilé de caoutchouc utilisé pour la fabrication de semi-finis afin d'obtenir des produits tels que flancs, nappe carcasse, nappes sommet (ou ceinture de pneumatique), bande de roulement, bourrage tringle, sous-couche de bande de roulement ou d'autres couches d'élastomères, préférentiellement la bande de roulement. Ces produits peuvent ensuite être utilisés pour la fabrication de pneumatiques, selon les techniques connues de l'homme du métier.

La vulcanisation (ou cuisson) est conduite de manière connue à une température généralement comprise entre 130°C et 200°C, sous pression, pendant un temps suffisant qui peut varier par exemple entre 5 et 90 min en fonction notamment de la température de cuisson, du système de vulcanisation adopté, de la cinétique de vulcanisation de la composition considérée ou encore de la taille du pneumatique.

### III - EXEMPLES DE REALISATION DE L'INVENTION

### III.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement l'élastomère diénique, la charge renforçante, et le ou les plastifiants, ainsi que les divers autres ingrédients optionnels à l'exception du système de réticulation. On conduit alors un travail thermomécanique (phase non-productive) en une étape, qui dure au total environ 3 à 4 min, jusqu'à atteindre une température maximale dite de « tombée » de 165°C.

On récupère le mélange ainsi obtenu, on le refroidit puis on incorpore le système de réticulation par exemple du soufre et un accélérateur, sur un mélangeur (homo-finisseur) à 30 °C, en mélangeant le tout (phase productive) pendant un temps approprié (par exemple entre 5 et 12 min).

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit extrudées sous la forme d'une bande de roulement.

### III.2 - Essais

Les essais qui suivent démontrent l'amélioration des propriétés ruptures des compositions des bandes de roulement des pneumatiques selon l'invention, tout en améliorant la résistance à l'usure et en conservant la résistance au roulement.

### III.2.1 - Etude de compositions d'élastomères comprenant des plastifiants phénoliques

Pour cela, trois compositions de caoutchouc pour bande de roulement ont été préparées comme indiqué précédemment, une conformément à l'invention (notées ci-après C-1.3) et deux non conformément à l'invention (composition témoin notée ci-après C-1.1 et composition non conforme C-1.2).

Leurs formulations sont présentées dans le tableau 1 ci-dessous.

**Tableau 1**

| **Composition** | **C-1.1** | **C-1.2** | **C-1.3** |
|---|---|---|---|
| SBR (1) | 75 | 75 | 75 |
| BR (2) | 25 | 25 | 25 |
| Charge inorganique (3) | 80 | 80 | 80 |
| Agent de couplage (4) | 6 | 6 | 6 |
| Noir de carbone (5) | 5 | 5 | 5 |
| Huile plastifiante (6) | 10 | 10 | - |
| Résine plastifiante (7) | 10 | - | - |
| Plastifiant phénolique 1 (8) | - | - | 20 |
| Plastifiant phénolique 2 (9) | - | 10 | - |
| Acide stéarique (10) | 2 | 2 | 2 |
| ZnO (11) | 1.5 | 1.5 | 1.5 |
| DPG (12) | 1.5 | 1.5 | 1.5 |
| CBS (13) | 1.8 | 1.8 | 1.8 |
| Soufre | 1.2 | 1.2 | 1.2 |

| | | | |
|---|---|---|---|
| (1) SBR (taux exprimé en SBR sec) avec 25% de motifs styrène et 75% de motifs butadiéne ; avec, pour la partie butadiénique, 55% de motifs 1-2, 23% de motifs 1-4 cis et 22% de motifs 1-4 trans ; (Tg = -25°C) ; (2) BR avec 1% de motifs 1-2, 1% de motifs trans 1-4 et 98 % de motifs cis 1-4 (Tg = - 106 °C) ; (3) Silice (« Ultrasil 7000 GR » de la société Degussa) ; (4) Silane TESPT (« Si69 » de la société Degussa) ; (5) Noir de carbone N234 (grade ASTM) ; (6) Huile MES (« Catenex SNR » de la société Shell) ; (7) Résine C5/C9 («Escorez ECR-373» de la société Exxon) ; (8) 2,2'-méthylène-bis(4-méthyl-6-tert-butylphénol), dénommé BPH, commercialisé par la société Lanxess, sous la référence commerciale « VULKANOX BKF » ; (9) Tris-(3,5-di-tert-butylhydroxybenzyl)isocyanurate, commercialisé par la société SONGWON, sous la dénomination commerciale « SONGNOX 3114 » ; (10) Stéarine ("Pristerene" de la société Uniquema) ; (11) Oxyde de zinc (grade industriel - société Umicore) ; (12) DPG = Diphénylguanidine (« Perkacit DPG » de la société Flexsys) ; (13) N-cyclohexyl-2-benzothiazyl-sulfénamide (« Santocure CBS » de la société Flexsys). | | | |

La composition C-1.1 est une composition témoin, à base majoritairement de SBR et minoritairement de BR, utilisable dans des bandes de roulement de « Pneus Verts » (à faible résistance au roulement) pour véhicules de tourisme. Les compositions C-1.2 et C-1.3 sont aussi à base de SBR et BR.

Toutes les compositions C-1.1 à C-1.3 comportent par ailleurs, un taux de 20 pce de système plastifiant.

La composition C-1.1 comporte comme système plastifiant un mélange d'une résine hydrocarbonée (résine C5/C9) et d'un plastifiant liquide (huile MES).

Les compositions C-1.2 et C-1.3 diffèrent uniquement de la composition témoin C-1.1 par le remplacement de la résine plastifiante et/ou de l'huile plastifiante par un plastifiant phénolique.

Les propriétés des compositions après cuisson (vulcanisation), ont été résumées dans le tableau 2 ci-dessous.

**Tableau 2**

| **Compositions** | **C-1.1** | **C1.2** | **C-1.3** |
|---|---|---|---|
| Dureté Shore A | 67 | 73 | 68 |
| Déformation rupture (%) | 505 | 450 | 590 |
| Contrainte rupture (MPa) | 19 | 19 | 21 |
| Energie rupture (MJ) | 97 | 85 | 120 |
| Tan(δ)ₘₐₓ 40°C | 0.27 | 0.27 | 0.28 |

La composition C-1.2, non conforme à l'invention, comportant le plastifiant phénolique SONGNOX® 3114 dont la température de fusion est supérieure à 170°C, présente des propriétés mécaniques moins bonnes par rapport à la composition témoin C-1.1, et une dureté shore A supérieure à celle de la composition C-1.1, c'est-à-dire un pouvoir plastifiant moindre par rapport à la composition témoin C-1.1.

On note que la composition C-1.3, comportant du plastifiant phénolique du type BPH, présentent des propriétés de cohésion, mesurée selon des essais de traction, nettement améliorées par rapport à la composition témoin C-1.1. En effet pour la composition C-1.3 on observe une augmentation de l'allongement rupture, de la contrainte à la rupture et de l'énergie à la rupture, par rapport à la composition témoin C-1.1.

La rigidité (dureté Shore) est équivalente pour les compositions C-1.1 et C-1.3 ce qui démontre que le plastifiant phénolique présente le même pouvoir plastifiant que l'huile MES et que la résine plastifiante.

On note que la composition C-1.3 présente des propriétés de cohésion, mesurées par les essais de traction, nettement améliorées par rapport à la composition témoin C-1.1. En effet pour cette composition on observe une augmentation de l'allongement rupture, et de l'énergie à la rupture à 20°C, par rapport à la composition témoin C-1.1. La valeur de la contrainte à la rupture reste inchangée par rapport à celle de la composition témoin C-1.1.

Par ailleurs, l'hystérèse (représentée par Tan(δ)ₘₐₓ à 40°C) de la composition C-1.3 selon l'invention est équivalente à celle de la composition témoin C-1.1, ce qui est un indicateur clair pour l'homme du métier d'une résistance au roulement conservée.

En conclusion, les résultats de ces essais démontrent que l'emploi de plastifiants phénoliques dont la température de fusion est inférieure à 170°C, permet d'obtenir des compositions de caoutchouc pour bande de roulement de pneumatique, présentant des propriétés de cohésion améliorées tout en conservant une bonne résistance au roulement, voire améliorée.

### III.2.2 - Etude de différentes compositions d'élastomères comprenant comme plastifiant phénolique le 2,2'-méthylène-bis(4-méthyl-6-tert-butylphénol)

Pour cela, six compositions de caoutchouc pour bande de roulement ont été préparées comme indiqué précédemment, trois conformes à l'invention (notées ci-après C-2.2, C-2.4, C-2.6) et trois non conformes à l'invention (compositions témoins notées ci-après C-2.1, C-2.3, C-2.5).

Leurs formulations sont présentées dans le tableau 3 ci-dessous. Toutes ces compositions ont en outre un taux élevé de système plastifiant.

**Tableau 3**

| **Composition** | **C-2.1** | **C-2.2** | **C-2.3** | **C-2.4** | **C-2.5** | **C-2.6** |
|---|---|---|---|---|---|---|
| SBR (1) | 65 | 65 | - | - | - | - |
| SBR (2) | 35 | 35 | - | - | - | - |
| SBR (3) | - | - | 20 | 20 | - | - |
| SBR (4) | - | - | - | - | 100 | 100 |
| NR (5) | - | - | 80 | 80 | - | - |
| Charge inorganique (6) | 90 | 90 | 110 | 110 | 110 | 110 |
| Agent de couplage (7) | 7 | 7 | 8 | 8 | 8 | 8 |
| Noir de carbone (8) | 5 | 5 | 5 | 5 | 5 | 5 |
| Résine plastifiante (9) | 20 | - | 50 | 30 | 60 | 40 |
| Huile plastifiante (10) | 20 | 20 | - | - | - | 6 |
| BPH (11) | - | 20 | - | 20 | - | 20 |
| Acide stéarique (12) | 2 | 2 | 2 | 2 | 2 | 2 |
| ZnO (13) | 1.5 | 1.5 | 1.5 | 1.5 | 1.5 | 1.5 |
| DPG (14) | 1.5 | 1.5 | 1.5 | 1.5 | 1.5 | 1.5 |
| CBS (15) | 1.8 | 1.8 | 1.8 | 1.8 | 1.8 | 1.8 |
| Soufre | 1.2 | 1.2 | 1.2 | 1.2 | 1.2 | 1.2 |

| | | | | | | |
|---|---|---|---|---|---|---|
| (1) SBR (taux exprimé en SBR sec) avec 30% de motifs styrène et 70% de motifs butadiéne ; avec, 4% de motifs 1-2, 18% de motifs 1-4 cis et 78% de motifs 1-4 trans ; (Tg = -50°C) ; (2) SBR (taux exprimé en SBR sec) avec 40% de motifs styrène et 60% de motifs butadiéne ; avec, 24% de motifs 1-2, 26% de motifs 1-4 cis et 50% de motifs 1-4 trans ; (Tg = -25°C) ; (3) SBR (taux exprimé en SBR sec) avec 25% de motifs styrène et 75% de motifs butadiéne ; avec, 24% de motifs 1-2, 21% de motifs 1-4 cis et 55% de motifs 1-4 trans ; (Tg = -50°C) ; (4) SBR fonctionnalisé silanol (taux exprimé en SBR sec) avec 15,5% de motifs styrène et 59% de motifs butadiéne ; avec, pour la partie butadiénique, 24% de motifs 1-2, 26% de motifs 1-4 cis et 50% de motifs 1-4 trans ; (Tg = -50°C) ; (5) NR, caoutchouc naturel plastifié ; (6) Silice (« Ultrasil 7000 GR » de la société Degussa) ; (7) Silane TESPT (« Si69 » de la société Degussa) ; (8) Noir de carbone N234 (grade ASTM) ; (9) Résine C5/C9 («Escorez ECR-373» de la société Exxon) ; (10) Huile MES (« Catenex SNR » de la société Shell) ; (11) 2,2'-méthylène-bis(4-méthyl-6-tert-butylphénol), dénommé BPH, commercialisé par la société Lanxess, sous la référence commerciale « VULKANOX BKF » ; (12) Stéarine ("Pristerene" de la société Uniquema) ; (13) Oxyde de zinc (grade industriel - société Umicore) ; (14) Diphénylguanidine (« Perkacit DPG » de la société Flexsys) ; (15) N-cyclohexyl-2-benzothiazyl-sulfénamide (« Santocure CBS » de la société Flexsys). | | | | | | |

La composition C-2.1 est une composition témoin, à base majoritairement d'un mélange de SBR ayant une haute température de transition vitreuse et d'un SBR ayant une basse température de transition vitreuse, et minoritairement du BR, utilisable dans des bandes de roulement de « Pneus Verts » (à faible résistance au roulement) pour véhicules de tourisme. La composition C-2.1 comporte comme système plastifiant un mélange d'une résine hydrocarbonée (résine C5/C9) et d'un plastifiant liquide (huile MES).

Les propriétés des compositions après cuisson (vulcanisation), ont été résumées dans le tableau 4 ci-dessous.

**Tableau 4**

| **Composition** | **C-2.1** | **C-2.2** | **C-2.3** | **C-2.4** | **C-2.5** | **C-2.6** |
|---|---|---|---|---|---|---|
| Dureté shore A | 69 | 68 | 69 | 69 | 65 | 65 |
| Tan(δ)ₘₐₓ à 40°C | 0.34 | 0.34 | 0.42 | 0.42 | 0.37 | 0.36 |
| Usure sur pneu | 100 | 108 | 100 | 108 | 100 | 109 |

La rigidité (dureté Shore) des compositions témoins C-2.1, C-2.3, C-2.5 est respectivement équivalente à la rigidité des compositions C-2.2, C-2.4 et C-2.6, ce qui démontre que le plastifiant phénolique présente le même pouvoir plastifiant que l'huile MES et que la résine plastifiante.

Par ailleurs, l'hystérèse (représentée par Tan(δ)ₘₐₓ à 40°C) des compositions témoins C-2.1, C-2.3, C-2.5 est équivalente respectivement à celle des compositions C-2.2, C-2.4 et C-2.6, ce qui est un indicateur clair pour l'homme du métier d'une résistance au roulement conservée.

Enfin, les propriétés d'usure des pneumatiques confectionnés respectivement avec les compositions C-2.2, C-2.4 et C-2.6 selon l'invention sont nettement améliorées par rapport aux propriétés des pneumatiques confectionnés respectivement avec les compositions témoins C-2.1, C-2.3 et C-2.5.

En conclusion, les résultats de ces essais montrent que l'emploi d'un plastifiant phénolique dont la température de fusion est inférieure à 170°C, permet d'obtenir des compositions de caoutchouc pour bande de roulement de pneumatique présentant des propriétés d'usure nettement améliorées, tout en conservant une bonne résistance au roulement, et un bon pouvoir plastifiant.

## Revendications

1. Pneumatique dont la bande de roulement comprend une composition de caoutchouc à base d'au moins :
- un élastomère diénique ;
- 50 à 150 pce d'une charge renforçante ;
- un système de réticulation ;
- un système plastifiant comprenant au moins de plus de 15 à 80 pce d'un composé phénolique non polymérique dont la température de fusion est inférieure à 170°C.

2. Pneumatique selon la revendication 1 dans laquelle la quantité de plastifiant phénolique est comprise dans un domaine allant de 16 à 50 pce.

3. Pneumatique selon la revendication 2 dans laquelle la quantité de plastifiant phénolique est comprise dans un domaine allant de 17 à 40 pce.

4. Pneumatique selon l'une quelconque des revendications 1 à 3, dans lequel le plastifiant phénolique est choisi dans le groupe constitué par le tetra-kis(methylène-3-(3,5-di-tert-butyl-4-hydroxyphényl)propionate)méthane, le 2,2'-méthylène-bis(4-méthyl-6-tert-butylphénol, le 2-tert-butyl-4-méthylphénol.

5. Pneumatique selon la revendication 4, dans lequel le plastifiant phénolique est le 2,2'-méthylènebis(4-méthyl-6-tert-butylphénol).

6. Pneumatique selon l'une quelconque des revendications 1 à 5, dans lequel l'élastomère diénique est choisi dans le groupe constitué par les polybutadiènes (BR), les polyisoprènes (IR) de synthèse, le caoutchouc naturel (NR), les copolymères de butadiène, les copolymères d'isoprène, et les mélanges de ces élastomères.

7. Pneumatique selon l'une quelconque des revendications 1 à 6, dans lequel la composition de caoutchouc comporte en outre un agent plastifiant supplémentaire.

8. Pneumatique selon la revendication 7, dans lequel le taux d'agent plastifiant supplémentaire est compris entre 0 et 90 pce, de préférence compris dans un domaine allant de 10 à 70 pce

9. Pneumatique selon les revendications 7 ou 8, dans lequel l'agent plastifiant supplémentaire est une résine hydrocarbonée, dont la température de transition vitreuse (Tg) est supérieure à 20 °C.

10. Pneumatique selon la revendication 9, dans lequel la résine hydrocarbonée est choisie dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

11. Pneumatique selon les revendications 7 ou 8, dans lequel l'agent plastifiant supplémentaire est un plastifiant liquide à 20°C et possède une température de transition vitreuse (Tg) inférieure à -20°C.

12. Pneumatique selon la revendication 11, dans lequel l'agent plastifiant liquide est choisi dans le groupe constitué par les les polymères diéniques liquides, les huiles polyoléfiniques, les huiles naphténiques, les huiles paraffiniques, les huiles DAE (Distillate Aromatic Extracts), les huiles MES (Medium Extracted Solvates), les huiles TDAE (Treated Distillate Aromatic Extracts), les huiles RAE (Residual Aromatic Extracts), les huiles TRAE (Treated Residual Aromatic Extracts), les huiles SRAE (Safety Residual Aromatic Extracts), les huiles minérales, les huiles végétales, les plastifiants éthers, les plastifiants esters, les plastifiants phosphates, les plastifiants sulfonates et les mélanges de ces composés.

13. Pneumatique selon les revendications 7 ou 8, dans lequel l'agent plastifiant supplémentaire est composé d'une résine hydrocarbonée selon les revendications 9 ou 10 et d'un plastifiant liquide selon les revendications 11 ou 12.

14. Pneumatique selon l'une des revendications précédentes dans lequel la charge renforçante est présente à un taux compris dans un domaine allant de 70 à 150 pce.

15. Pneumatique selon l'une quelconque des revendications 1 à 14, dans lequel la charge renforçante est du noir de carbone, de la silice, ou un mélange de noir de carbone et de silice.

16. Pneumatique selon la revendication 15 dans lequel la silice est la charge majoritaire en poids.

## Patentansprüche

1. Reifen, dessen Lauffläche eine Kautschukzusammensetzung auf Basis von mindestens:
- einem Dienelastomer;
- 50 bis 150 phe eines verstärkenden Füllstoffs;
- einem Vernetzungssystem;
- einem Weichmachersystem, das mindestens mehr als 15 bis 80 phe einer nicht polymeren Phenolverbindung mit einem Schmelzpunkt von weniger als 170 °C umfasst,
umfasst.

2. Reifen nach Anspruch 1, wobei die Menge des Phenol-Weichmachers in einem Bereich von 16 bis 50 phe liegt.

3. Reifen nach Anspruch 2, wobei die Menge des Phenol-Weichmachers in einem Bereich von 17 bis 40 phe liegt.

4. Reifen nach einem der Ansprüche 1 bis 3, wobei der Phenol-Weichmacher aus der Gruppe bestehend aus Tetrakis(methylen-3-(3,5-di-tert-butyl-4-hydroxyphenyl)propionat)methan, 2,2'-Methylenbis(4-methyl-6-tert-butylphenol) und 2-tert-Butyl-4-methylphenol ausgewählt ist.

5. Reifen nach Anspruch 4, wobei es sich bei dem Phenol-Weichmacher um 2,2'-Methylenbis(4-methyl-6-tert-butylphenol) handelt.

6. Reifen nach einem der Ansprüche 1 bis 5, wobei das Dienelastomer aus der Gruppe bestehend aus Polybutadienen (BR), synthetischen Polyisoprenen (IR), Naturkautschuk (NR), Butadien-Copolymeren, Isopren-Copolymeren und Mischungen dieser Elastomere ausgewählt ist.

7. Reifen nach einem der Ansprüche 1 bis 6, wobei die Kautschukzusammensetzung außerdem einen zusätzlichen Weichmacher enthält.

8. Reifen nach Anspruch 7, wobei der Gehalt an zusätzlichem Weichmacher zwischen 0 und 90 phe, vorzugsweise in einem Bereich von 10 bis 70 phe, liegt.

9. Reifen nach Anspruch 7 oder 8, wobei es sich bei dem zusätzlichen Weichmacher um ein Kohlenwasserstoffharz mit einer Glasübergangstemperatur (Tg) von mehr als 20 °C handelt.

10. Reifen nach Anspruch 9, wobei das Kohlenwasserstoffharz aus der Gruppe bestehend aus (D)CPD-Homopolymerharzen, (D)CPD/Styrol-Copolymerharzen, Polylimonenharzen, Limonen/Styrol-Copolymerharzen, Limonen/(D)CPD-Copolymerharzen, C5-Schnitt/Styrol-Copolymerharzen, C5-Schnitt/C9-Schnitt-Copolymerharzen und Mischungen dieser Harze ausgewählt ist.

11. Reifen nach Anspruch 7 oder 8, wobei es sich bei dem zusätzlichen Weichmacher um einen bei 20 °C flüssigen Weichmacher mit einer Glasübergangstemperatur (Tg) von weniger als -20 °C handelt.

12. Reifen nach Anspruch 11, wobei der flüssige Weichmacher aus der Gruppe bestehend aus flüssigen Dienpolymeren, Polyolefinölen, naphthenischen Ölen, Paraffinölen, DAE-Ölen (DAE = Distillate Aromatic Extracts), MES-Ölen (MES = Medium Extracted Solvates), TDAE-Ölen (TDAE = Treated Distillate Aromatic Extracts), RAE-Ölen (RAE = Residual Aromatic Extracts), TRAE-Ölen (TRAE = Treated Distillate Aromatic Extracts), SRAE-Ölen (Safety Residual Aromatic Extracts), Mineralölen, Pflanzenölen, Ether-Weichmachern, Ester-Weichmachern, Phosphat-Weichmachern, Sulfonat-Weichmachern und Mischungen dieser Verbindungen ausgewählt ist.

13. Reifen nach Anspruch 7 oder 8, wobei der zusätzliche Weichmacher aus einer Verbindung aus einem Kohlenwasserstoffharz nach Anspruch 9 oder 10 und einem flüssigen Weichmacher nach Anspruch 11 oder 12 besteht.

14. Reifen nach einem der vorhergehenden Ansprüche, wobei der verstärkende Füllstoff in einem Gehalt in einem Bereich von 70 bis 150 phe vorliegt.

15. Reifen nach einem der Ansprüche 1 bis 14, wobei es sich bei dem verstärkenden Füllstoff um Ruß, Kieselsäure oder eine Mischung von Ruß und Kieselsäure handelt.

16. Reifen nach Anspruch 15, wobei es sich bei der Kieselsäure um den gewichtsmäßig überwiegenden Füllstoff handelt.

## Claims

1. Tyre, the tread of which comprises a rubber composition based on at least:
- a diene elastomer;
- 50 to 150 phr of a reinforcing filler;
- a crosslinking system;
- a plasticizing system comprising at least more than 15 to 80 phr of a non-polymeric phenolic compound, the melting point of which is less than 170°C.

2. Tyre according to Claim 1, wherein the amount of phenolic plasticizer is within a range extending from 16 to 50 phr.

3. Tyre according to Claim 2, wherein the amount of phenolic plasticizer is within a range extending from 17 to 40 phr.

4. Tyre according to any one of Claims 1 to 3, wherein the phenolic plasticizer is selected from the group consisting of tetrakis(methylene-3-(3,5-di-tert-butyl-4-hydroxyphenyl)propionate)methane, 2,2'-methylenebis(4-methyl-6-tert-butylphenol), 2-tert-butyl-4-methylphenol.

5. Tyre according to Claim 4, wherein the phenolic plasticizer is 2,2'-methylenebis(4-methyl-6-tertbutylphenol).

6. Tyre according to any one of Claims 1 to 5, wherein the diene elastomer is selected from the group consisting of polybutadienes (BR), synthetic polyisoprenes (IR), natural rubber (NR), butadiene copolymers, isoprene copolymers and mixtures of these elastomers.

7. Tyre according to any one of Claims 1 to 6, wherein the rubber composition also comprises an additional plasticizer.

8. Tyre according to Claim 7, wherein the content of additional plasticizer is between 0 and 90 phr, preferably within a range extending from 10 to 70 phr.

9. Tyre according to Claim 7 or 8, wherein the additional plasticizer is a hydrocarbon-based resin, the glass transition temperature (Tg) of which is greater than 20°C.

10. Tyre according to Claim 9, wherein the hydrocarbon-based resin is selected from the group consisting of (D)CPD homopolymer resins, limonene/styrene copolymer resins, limonene/(D)CPD copolymer resins, C5 fraction/styrene copolymer resins, C5 fraction/C9 fraction copolymer resins, and mixtures of these resins.

11. Tyre according to Claim 7 or 8, wherein the additional plasticizer is a plasticizer which is liquid at 20°C and has a glass transition temperature (Tg) of less than -20°C.

12. Tyre according to Claim 11, wherein the liquid plasticizer is selected from the group consisting of liquid diene polymers, polyolefinic oils, naphthenic oils, paraffinic oils, DAE (Distillate Aromatic Extracts) oils, MES (Medium Extracted Solvates) oils, TDAE (Treated Distillate Aromatic Extracts) oils, RAE (Residual Aromatic Extracts) oils, TRAE (Treated Residual Aromatic Extracts) oils, SRAE (Safety Residual Aromatic Extracts) oils, mineral oils, plant oils, ether plasticizers, ester plasticizers, phosphate plasticizers, sulfonate plasticizers and mixtures of these compounds.

13. Tyre according to Claim 7 or 8, wherein the additional plasticizer is composed of a hydrocarbon-based resin according to Claim 9 or 10 and a liquid plasticizer according to Claim 11 or 12.

14. Tyre according to one of the preceding claims, wherein the reinforcing filler is present at a content within in a range extending from 70 to 150 phr.

15. Tyre according to any one of Claims 1 to 14, wherein the reinforcing filler is carbon black, silica, or a mixture of carbon black and silica.

16. Tyre according to Claim 15, wherein the silica is the predominant filler by weight.
